# EUROPEAN PATENT SPECIFICATION

(11) **EP 1 939 465 B1**
(45) Date of publication and mention of the grant of the patent: **14.07.2010**
(21) Application number: 05824210.8
(22) Date of filing: 19.12.2005
(51) Int. Cl.: F16B 25/00

(54) **SELF-TAPPING SCREW**
BLECHSCHRAUBE
VIS AUTOTARAUDEUSE

(30) Priority: 28.09.2005 CN 200520045360 U
(43) Date of publication of application: 02.07.2008
(73) Proprietor: Aironware (Shangai) Co., Ltd., Wai Gao Qiao Free Trade Zone Shangai 200131 (CN)
(72) Inventor: DING, Weiming, Shanghai 200336 (CN)
(74) Representative: Korga, Leokadia
(86) International application number: PCT/CN2005/002239
(87) International publication number: WO 2007/036081

(56) References cited:
- CN-A- 1 274 812
- DE-U1- 29 814 010
- FR-A1- 2 683 275
- GB-A- 957 675
- GB-A- 2 040 769
- US-A- 3 935 785
- US-A- 5 044 855
- US-A- 5 795 120
- US-A1- 2001 005 474
- US-B1- 6 254 327
- US-B2- 6 468 014

## Description

### FIELD OF THE INVENTION

The invention relates to fasteners, and particularly to a self-tapping threaded screw for jointing fiberboard.

### BACKGROUND OF INVENTION

Conventional screws for jointing fiberboard and similar materials possess high hardness, typically in the range of 50 to 58 on the Rockwell Hardness C scale. The high hardness allows a screw to be self-tapping, i.e., to create its own thread and advance when turned. Therefore, it is not necessary to pre-make threads in the objects to be connected.

Commercially available screws have various shapes and sizes according to specific needs. Typically, a screw comprises a screw head and a shaft. Screw head and screw drive types include Phillips pan head (Phil Pan HD), Phillips countersunk head (Phil CS HD), Phillips oval head (Phil OL HD), Phillips double countersunk head, Pozidriv pan head (Pozi Pan HD), Pozidriv countersunk head (Pozi CS HD),Pozidriv oval head (Pozi OL HD), Pozidriv double countersunk head, Torx pan heads, Torx countersunk head, Torx oval head, Torx double countersunk head, slotted pan head, etc. The shaft is wrapped around with a helical groove or thread, which may be coarse, fine, or double thread, and the shaft may be additionally appended with a screw tip.

Conventional screws for jointing fiberboard and similar materials adopt threads with a thread profile angle of about 40 degrees. The screw pitch is a little bit larger than that of a medium radius self-tapping screw of the same kind. However, during tapping, the front and back sides of the thread make a large contact area with a tapped hole, which results in a large friction moment, requiring application of a large force to join fiberboard.

There are many patents relating to screws with polygonal such as triangular and pentagonal threads. All of these patents alleviate resistance problem during tapping of the screw, and enables the screw to be rapidly tapped into an object.

From US Patent Application Publication No. US 2001/0005474 A1 known is a screw comprising cylindrical shank having an upper portion formed with spiral circular threads and a lower portion formed with spiral triangular threads, each of the spiral triangular threads having three budges having three sharp edges and three pointed tips, the pointed tips of the spiral triangular threads being located at different positions, the cylindrical shank having a pointed end at a lower portion thereof.

### SUMMARY OF THE INVENTION

In view of the disadvantages in the prior art, one objective of the invention is to provide a self-tapping screw to solve the problems mentioned above. In accordance therewith, the invention provides a laborsaving and efficient screw for jointing fiberboard.

The technical solution of the invention is:
A self-tapping screw comprising a screw head, a shaft and a thread wrapped around the shaft; wherein a cross section of the thread at any point is pentagonal, hexagonal or heptagonal, all edges thereof are straight lines, and vertices thereof are in shape of a chamfer.

In certain embodiments of the invention, the vertices of the cross-section are disposed on an envelope circumference.

In certain embodiments of the invention, the thread has a twisted multi-prismal enveloping surface.

In certain embodiments of the invention, the screw further comprises a tip.

In certain embodiments of the invention, the shaft of the screw is partially or entirely wrapped around with the thread.

The technical effect of the invention:

The cross section in the shape of a pentagon, a hexagon or a heptagon enables to reduce the contact area of the screw threads with the object to be connected, hence alleviating much resistance while the screw is being tapped into the object to be connected. Multi-contact points are formed in the radial direction, hence reducing the tapping moment. The vertices of the threads, formed by the adjacent edges of the polygon, are in shape of a chamfer in order to prevent the vertices from being folded and the users from being injured. The spiral multi-prismal construction allows bits to be discharged more easily. This saves labor as a screw of the invention can be tapped into the object to be connected more rapidly than a conventional self-tapping screw.

### BRIEF DESCRIPTION OF THE DRAWINGS

In the drawings:
Fig. 1 is schematic exterior view of a self-tapping screw according to one embodiment of the invention;
Fig. 2 is a left side view thereof;
Fig. 3 is a cross-sectional view along the line A-A thereof;
Fig. 4 is a left side view of the cross-section along the line B-B thereof; and
Fig. 5 is a schematic view illustrating extruding the screw thread.

Legend: **10 -** self-tapping screw; **1 -** screw head; **2 -** screw shaft; **21 -** non-threaded portion; **22 -** thread; **221 -** screw tip; **31 -** screw head of a Torx double countersunk type; **32 -** cross section; **33 -** envelope circumference; **34 -** vertex of the thread; **35 -** radius R; **36 -** cross section of the thread vertex; **37 -** thread vertices line; **38 -** vertical axis of the shaft.

### EXAMPLES

The invention itself, both as to its construction and its mode of operation, will be best understood after reading the following description of the best mode for carrying out the invention, when read in conjunction with the accompanying drawings.

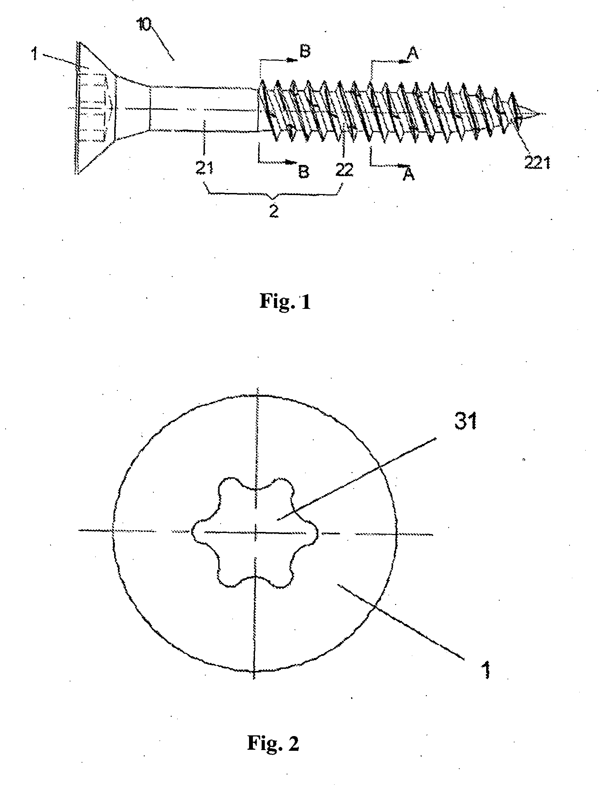

Fig 1 shows a schematic exterior view of a pentagonal self-tapping screw, where from the left to the right are the screw head 1, and the screw shaft 2. The screw shaft 2 includes non-threaded portion 21 and threaded portion 22. The threaded portion 22 includes a screw tip 221. Fig 2 is a left view of the self-tapping screw, in which the screw head is a Torx double countersunk head 31. This is not intended to be a limitation of the invention.

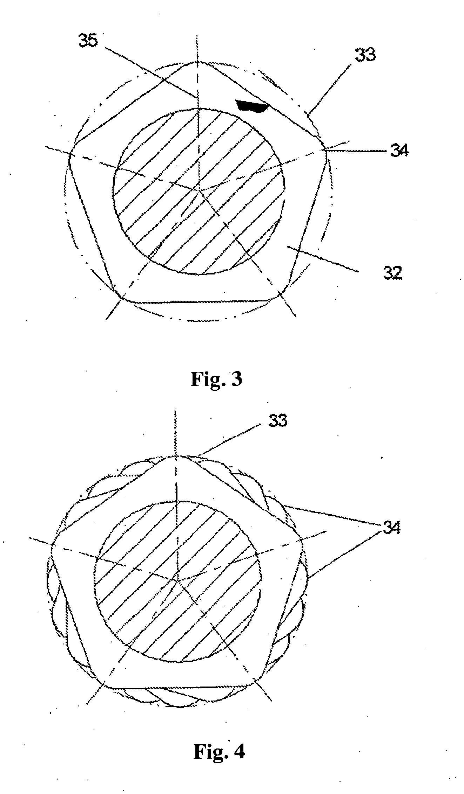

Fig 3 shows a cross-sectional view along the A-A line in Fig. 1 of a self-tapping screw. The five vertices 34 of the cross section 32 are all locate on the envelope circumference 33 of the cross section. The envelope circumference is centered on the vertical axis of the shaft 38 and at a radius of R 35. Furthermore, all vertices are evenly distributed on the envelope circumference 33. The dimension of radius R can be adjusted to different sizes as practical. Fig 4 shows a left side view of the cross-section along the line B-B in Fig. 1 of the self-tapping screw. As shown in Fig. 4, all vertices of the pentagonal thread are located on the envelope circumference 33 of the cross section at the radius 35, and the vertices are distributed on the envelope circumference 33 of the radius 35 symmetrically.

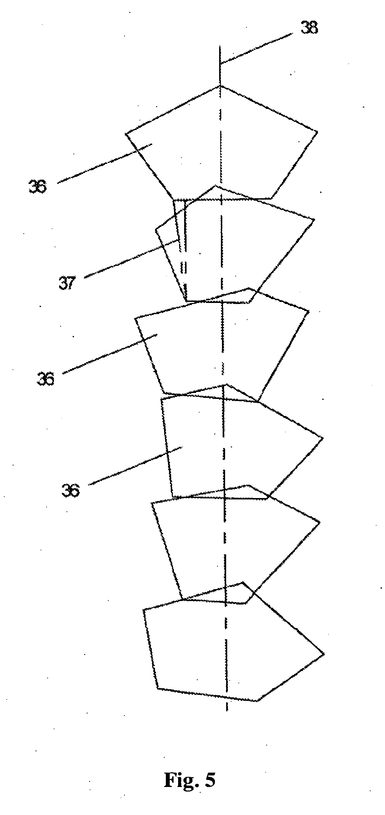

Fig. 5 shows an enlarged view of a portion of the thread 22. Any arbitrary thread vertices lines 37 of adjacent threads 36 in the direction of the thread are not parallel to the vertical axis of the shaft 38. The thread vertices lines of all thread vertices 34 in the thread direction, elevate spirally from bottom to top, and form an enveloping surface of the thread as a spirally elevating pentagonal prism.

The thread vertex 34 of the thread 22 is chamfered.

The thread 22 of the self-tapping screw is made either as a hexagon or heptagon, structural characteristics of which are the same as those of the pentagon.

The self-tapping screw of the invention has an obvious advantage over conventional fiberboard screws, which is quantified in the following example as compared with a conventional triangular-thread screw.

In the case of a non-lubricating surface: when being tapped into a depth of 20 mm, a conventional fiberboard screw has an average tapping moment of 4.3600 N·m, while a pentagonal self-tapping screw of the invention has an average tapping moment of 3.6125 N·m. This amounts to a 17.14 % reduction of the tapping moment over a conventional screw. When being tapped into a depth of 30 mm, a conventional fiberboard screw has an average tapping moment of 5.4250 N·m, while the pentagonal self-tapping screw of the invention has an average tapping moment of 4.1750 N·m. This amounts to a 23.04 % reduction of the tapping moment over a conventional screw.

In the case of a lubricating surface: when being tapped into a depth of 20 mm, a conventional fiberboard screw has an average tapping moment of 2.3000 N·m, while a pentagonal self-tapping screw of the invention has an average tapping moment of 2.1375 N·m. This amounts to a 7.07 % reduction of the tapping moment over a conventional screw. When being tapped into a depth of 30 mm, a conventional fiberboard screw has an average tapping moment of 3.4750 N·m, while the pentagonal self-tapping screw of the invention has an average tapping moment of 3.0225 N·m. This amounts to a 13.02 % reduction of the tapping moment over a conventional screw.

It can be known from above that the self-tapping screw of the invention is better than common fiberboards regardless of a state of a surface of the fiberboard.

## Claims

1. A self-tapping screw (10) comprising a screw head (1), a shaft (2), and a thread (22) wrapped around said shaft (2), **characterized in that** a cross section (34) of said thread (22) at any point along said shaft (2) is pentagonal, hexagonal or heptagonal, all edges thereof are straight lines, and the vertices (34) thereof are chamfered.

2. The self-tapping screw of claim 1, wherein the vertices (34) of the cross-section (32) are disposed on an envelope circumference (33).

3. The self-tapping screw of claim 1, wherein said thread (22) has a twisted multi-prismal enveloping surface.

4. The self-tapping screw of claim 2, wherein said screw further comprises a tip (221).

5. The self-tapping screw of claim 1, wherein said shaft (2) of the screw (10) is partially or entirely wrapped around with said thread (22).

## Patentansprüche

1. Schneidschraube (10), umfassend einen Schraubenkopf (1), einen Schaft (2) und ein Gewinde (22), das um den Schaft (2) gewickelt ist, **dadurch gekennzeichnet, dass** ein Querschnitt (34) des Gewindes (22) an jedem Punkt entlang des Schafts (2) fünfeckig, sechseckig oder siebeneckig ist, wobei alle Kanten davon gerade Linien sind und die Eckpunkte (34) davon abgefast sind.

2. Schneidschraube nach Anspruch 1, wobei die Eckpunkte (34) des Querschnitts (32) auf einem Hüllkurvenumfang (33) angeordnet sind.

3. Schneidschraube nach Anspruch 1, wobei das Gewinde (22) eine verdrehte polyprismatische Hüllfläche aufweist.

4. Schneidschraube nach Anspruch 2, wobei die Schraube ferner eine Spitze (221) umfasst.

5. Schneidschraube nach Anspruch 1, wobei der Schaft (2) der Schraube (10) teilweise oder vollständig mit dem Gewinde (22) umwickelt ist.

## Revendications

1. Vis autotaraudeuse (10) comprenant une tête de vis (1), une tige (2) et un filetage (22) enroulé autour de ladite tige (2), **caractérisée en ce qu'**une coupe transversale (34) dudit filetage (22) à n'importe quel point le long de ladite tige (2) est pentagonale, hexagonale ou heptagonale, tous les bords de celle-ci sont des lignes droites, et les sommets (34) de celle-ci sont biseautés.

2. Vis autotaraudeuse selon la revendication 1, dans laquelle les sommets (34) de la coupe transversale (32) sont disposés sur une circonférence d'enveloppe (33).

3. Vis autotaraudeuse selon la revendication 1, dans laquelle ledit filetage (22) a une surface d'enveloppe multi-prismale tordue.

4. Vis autotaraudeuse selon la revendication 2, dans laquelle ladite vis comprend en outre un embout (221).

5. Vis autotaraudeuse selon la revendication 1, dans laquelle ladite tige (2) de la vis (10) est partiellement ou entièrement entourée par ledit filetage (22).
